# EUROPEAN PATENT SPECIFICATION

(11) **EP 0 382 221 B1**
(45) Date of publication and mention of the grant of the patent: **27.12.1995**
(21) Application number: 90102506.4
(22) Date of filing: 08.02.1990
(51) Int. Cl.: G02B 26/10

(54) **Light deflecting device**
Lichtablenkvorrichtung
Dispositif de déviation de lumière

(30) Priority: 09.02.1989 JP 30234/89
(43) Date of publication of application: 16.08.1990
(73) Proprietor: CANON KABUSHIKI KAISHA, Tokyo (JP)
(72) Inventor: Komori, Shin, Yokohama-shi, Kanagawa-ken (JP)
(74) Representative: Tiedtke, Harro, Dipl.-Ing.

(56) References cited:
- EP-A- 0 278 332
- US-A- 4 623 216
- US-A- 4 717 223
- PATENT ABSTRACTS OF JAPAN vol. 9, no. 62, (P-342)[1785] 19th March 1985 & JP-A-59 197 009

## Description

This invention relates to a method of regulating a light deflecting apparatus, a light deflecting apparatus for use in a laser beam printer, a bar code reading apparatus or the like and a regulating apparatus for applying the aforementioned method.

Heretofore, in light deflecting devices for deflecting a light beam, rotational polygon mirrors rotatable in one direction have been widely used because of the stability of their speed of rotation and their scanning speed.

However, where such a rotational polygon mirror is used as the light deflecting device of a scanning optical apparatus, there is a problem that the deflecting-scanning surface or the reflecting surface thereof tilts from a plane perpendicular to the ideal main scanning surface to be formed by a scanning beam deflected thereby.

A means for solving such a problem is, for example, one as disclosed in Japanese Laid-Open Patent Application No. 63-188112 (corresponding U.S. Application Serial No. 149,020 filed on January 27, 1988 and corresponding EP Application No. 88101263 filed on January 28, 1988 and published on August 17, 1988 under EP Publication No. 0278332). That is, the opposed portions of a cylindrical metallic member are cut into parallel flat surfaces and these two surfaces are used as reflecting surfaces for deflecting and scanning a light beam. This rotational mirror is mounted so that the two parallel reflecting surfaces may be parallel to the direction of inclination of the mounting flange surface of the rotational mirror and thereby the above-mentioned tilt of the reflecting surface of the rotational mirror by the inclination of the mounting flange surface may not occur, whereby the irregularity of the pitch of scanning lines on a surface scanned by a scanning beam may be minimized.

By this method, it is made unnecessary to use an expensive special optical system for correcting the above-mentioned tilt (a so-called tilt correcting optical system) which has heretofore been required.

However, the inclination of the mounting flange surface of the rotational mirror is generally very small and it is difficult to detect the direction of this inclination. Accordingly, it is also difficult to assemble the rotational mirror with the reflecting surface of the rotational mirror and the direction of inclination of the mounting flange surface being made parallel to each other. Also, even if the direction of inclination is detected at all, there is irregularity during assembly and therefore, it is nearly impossible to assemble a great quantity of rotational mirrors always with good accuracy.

The claimed subject matter proceeds from a state of the art as is described in the US-A-4 623 216. This document shows a light deflecting apparatus having a rotatable mirror member which is caused to strike with its reference surface against the receiving surface of the receiving member whose accuracy (perpendicularity) relative to the rotary shaft is sufficiently guaranteed. The rotary mirror member is held by a resilient member.

It is an object of the invention to provide a method of and an apparatus for regulating a light deflecting apparatus in order to lower the unevenness of pitch of the deflected light beam in a simple way. It is a further object of the invention to provide a light deflecting apparatus which has a low unevenness of pitch of the deflected light beam and a laser beam printer having the light deflecting apparatus.

This object is achieved by the features of the claims 1, 5, 15 and 16.

The light deflecting apparatus according to claim 5 is of such a construction that by biasing means, the rotational mirror is urged against the mounting surface of a rotational mirror mounting portion rotatable by a rotational mirror driving motor and the rotational mirror can be separated from the mounting surface against the biasing force of the biasing means and when so separated, the rotational mirror and the mounting surface can rotate relative to each other.

Consequently, according to claim 1, after the rotational mirror has been incorporated into the device, the phase relation between the rotational mirror and said mounting surface can be regulated and the rotational mirror can be reliably brought into a state in which the reflecting surface thereof becomes parallel to the direction of inclination of said mounting surface.

In a regulating apparatus according to claim 16 the rotary shaft of the driving motor can be fixed by a clamp porfion to thereby fix the mounting surface of the rotational mirror mounting portion and the rotational mirror can be rotated while being floated up from said mounting surface by the pawl of the regulating device, thereby change the phase position thereof.

### BRIEF DESCRIPTION OF THE DRAWINGS

Figure 1 is a cross-sectional view of an embodiment of the light deflecting device of the present invention.

Figure 2 schematically shows the construction of a scanning optical apparatus using the light deflecting device of the present invention.

Figure 3 illustrates a method of regulating the phase relation of a rotational mirror.

Figure 4 is a graph showing the relation between the phase position of the rotational mirror and the amount of unevenness of pitch.

Figure 5 is a cross-sectional view of another embodiment of the light deflecting device of the present invention.

Figures 6 and 8 illustrate further methods of regulating the phase relation of the rotational mirror.

Figure 7 is a view of the rotational mirror of the present invention as it is seen from above.

### DESCRIPTION OF THE PREFERRED EMBODIMENTS

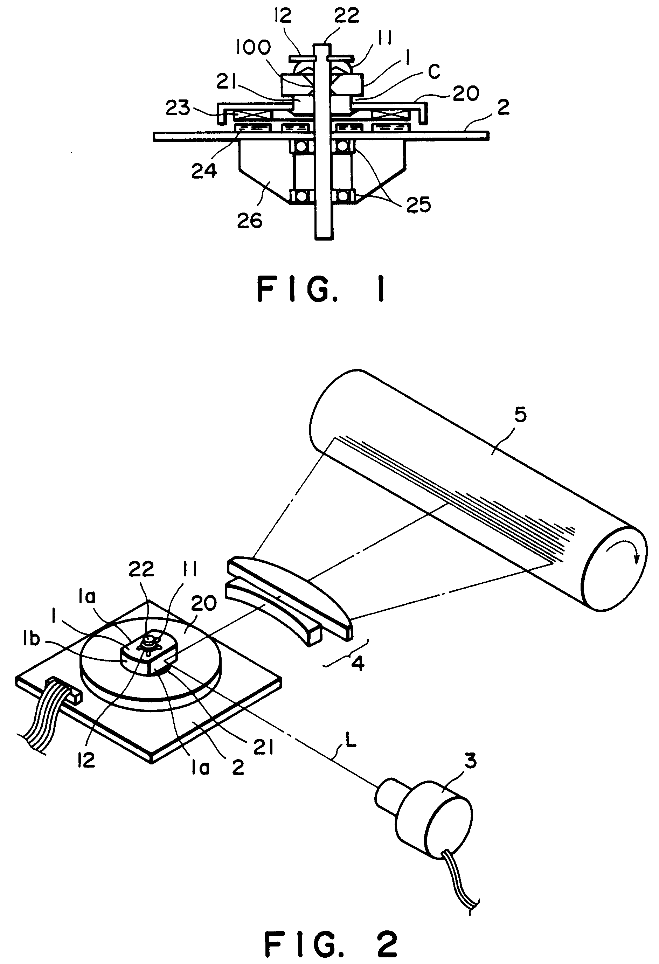

Figure 1 is a cross-sectional view of an embodiment of the light deflecting device of the present invention. Figure 2 schematically shows the construction of a scanning optical apparatus using the light deflecting device shown in Figure 1. In the figures, the reference numeral 1 designates a rotational mirror having its two opposed surfaces cut into flat surfaces and worked into mirror surfaces to provide reflecting surfaces 1a for deflecting a laser beam, and the reference numeral 2 denotes a driving motor for rotatively driving the rotational mirror 1. A laser beam L emitted from a laser source unit 3 including a semiconductor laser and a collimator lens is incident on the rotational mirror 1 and is deflected thereby.

The reflecting surfaces 1a of the rotational mirror 1 for deflecting and scanning the laser beam are substantially flat surfaces and the portions 1b of the rotational mirror which do not deflect the laser beam are curved surfaces. These curved surfaces are arcuate surfaces which are centered about the center of rotation of the rotational mirror 1.

The rotational mirror 1 is mounted on a mounting portion 21 (a mounting flange) which lies in the central portion of the rotor 20 of the driving motor 2. The mounting portion 21 is constructed integrally with the rotary shaft 22 of the driving motor 2.

The laser beam L deflected by the rotational mirror 1 passes through an imaging lens system 4 endowed with the f·ϑ function (the function in which the ideal image height is given by the product of the focal length f and the beam incidence angle ϑ), whereafter it is imaged on a photosensitive drum 5, which is a surface to be scanned, and forms a latent image.

Further, around the photosensitive drum 5, there are disposed process instruments, not shown, such as a primary charger, a developing device for causing a developer to adhere to that portion of the photosensitive drum 5 which has been scanned and subjected to exposure and effecting positive development, a transfer charger and a cleaner, and printing is effected on paper or the like by the known electrophotographic process.

Even when there is an angle of inclination between the mounting surface of the flange 21 and the rotary shaft of the motor 2 (in other words, the mounting surface of the flange 21 is inclined from state parallel to the ideal main scanning plane to be formed by the scanning beam), the reflecting surfaces 1a of the rotational mirror 1 are made parallel to the direction of inclination of the mounting surface of the flange 21 and the rotational mirror 1 is mounted so that the reflecting surfaces 1a may not be inclined from a state perpendicular to said ideal main scanning plane, whereby the unevenness of the pitch of the scanning lines in the sub scanning direction which is a direction perpendicular to the main scanning plane that ought to occur due to the inclination of the mounting surface of the flange 21 can be prevented.

A construction which makes this possible will now be described in detail. In the cross-sectional view of the vicinity of the motor 2 shown in Figure 1, the outer periphery of the flange 21 on which the rotational mirror 1 is mounted is smaller in diameter than the circumscribed circle of the rotational mirror 1, and the flange 21 is fixed to the rotary shaft 22 as by shrinkage fit or adhesion and is fixed to the rotor 20 by caulking. The upper surface of the rotor 20 and the bottom surface of the rotational mirror 1 are not in contact with each other. A driving magnet 23 is mounted inside the rotor 20, and by electrically energizing a driving coil 24 disposed in opposed relationship with the magnet 23 and mounted on the body portion of the motor 2, the rotor 20 is rotatively driven in accordance with a force produced between the magnet 23 and the coil 24. This rotative driving is highly accurately controlled by a Hall element or the like, not shown. Further, the driving motor 2 is comprised of a bearing 25 and a motor case 26 having this bearing, etc. therein.

The hollow portion of the rotational mirror 1 having its opposed two surfaces formed into the reflecting mirror surfaces 1a which is fitted to the rotary shaft 22 is greatly chamfered in the edge portions thereof so that the fitted portion 100 thereof to the rotary shaft 22 may become as small as possible and the rotary shaft 22 and the fitted portion 100 may almost be in line contact with each other. That is, design is made such that the thickness of the fitted portion in a direction parallel to the rotary shaft is remarkably small as compared with the thickness of the rotational mirror.

The rotational mirror 1 is controlled from above and urged against the flange 21 by a resilient member 11 (biasing means) such as a star-shaped spring. Thus, a frictional force works between the bottom surface of the rotational mirror 1 and the mounting surface of the flange 21, whereby the rotational mirror 1 is fixed to the flange 21, and the rotor 20, the flange 21, the rotary shaft 22, the rotational mirror 1, etc. rotate as a unit. In the upper portion of the resilient member 11, a fixing member 12 for the purpose of tightening or the like is fixed to the rotary shaft 22 and holds down the resilient member 11 between itself and the upper surface of the rotational mirror 1.

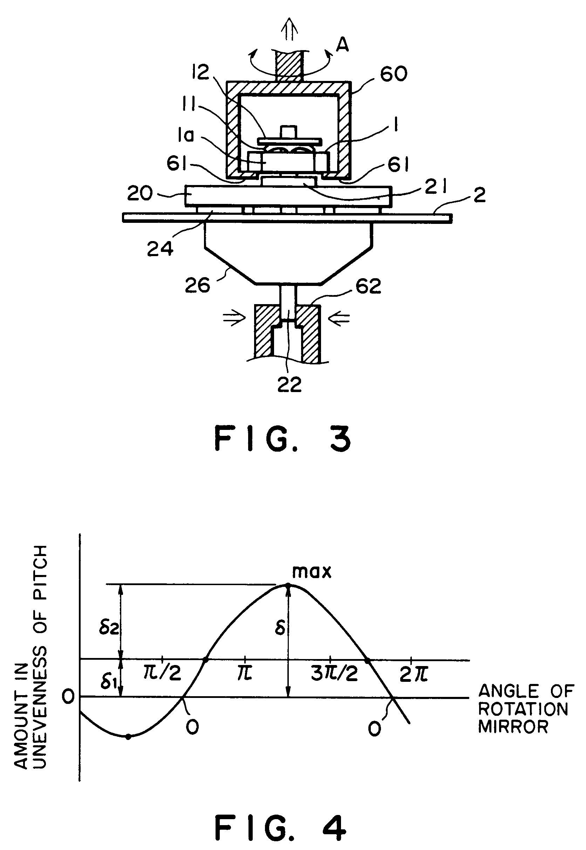

A method of regulating the rotational mirror 1 so that the reflecting surfaces 1a thereof may be parallel to the direction of inclination of the surface of the flange 21 after assembly will now be described with reference to Figures 3 and 4. Figure 3 illustrates a method of regulating the phase position of the rotational mirror, and Figure 4 is a graph showing the relation between the phase position of the rotational mirror and the amount of unevenness of pitch.

Figure 4 shows the amount of unevenness of the pitch of the scanning lines when the phase of the rotational mirror 1 arbitrarily mounted on the surface of the flange 21 (the position of the rotational mirror 1 relative to the flange 21 as it is represented in terms of the angle of rotation about the rotary shaft 22 with the arbitrary mounted position as the reference) is changed in succession.

In this figure, the graph approximate to a sine curve indicated by an amplitude δ₂ shows the relation between the amount of unevenness of the pitch and the angle of the rotational mirror when only the inclination of the surface of the flange 21 is taken into consideration. If the tilt of the mirror surface of the rotational mirror itself is further added thereto, the O position becomes offset by δ₁ as shown. In this figure, the length from the O position to the curve is the amount of unevenness of the pitch, and the maximum amount of unevenness of the pitch is δ.

Usually, the inclination of the surface of the flange is greater than the tilt of the mirror surface of the rotational mirror and therefore, the relation as shown in Figure 4 is established and it is possible to nullify the amount of unevenness of the pitch. However, when the machining accuracy and mounting accuracy of the surface of the flange are good and the inclination of the surface of the flange becomes smaller than the tilt of the mirror surface of the rotational mirror, δ₂ in the figure becomes very small and the amount of unevenness of the pitch will not become zero even if the angle of the rotational mirror is changed.

Here, if the focal length of the imaging optical system is up to the order of 100 mm, the tilt of the mirror surface of the rotational mirror will pose no problem if the existing machining accuracy is used and therefore, the inclination of the surface of the flange can be considered to be the main factor of the unevenness of the pitch.

However, where the focal length of the imaging optical system is greater than that indicated above, it is preferable to make the inclination of the surface of the flange greater than the tilt of the mirror surface so that the relation as shown in Figure 4 may be brought about.

An example in which the phase regulation of the rotational mirror 1 is automatically effected as by an automatic regulating machine will hereinafter be described with reference to Figures 1 and 3.

Since, as previously described, the size of the mounting surface of the flange 21 is smaller than the outer peripheral circle circumscribed by the curved surface which is the nonreflecting surface 1b of the rotational mirror 1, gaps C are formed at two substantially opposed locations between the upper surface of the rotor 20 and the bottom surface of the rotational mirror 1. In order that such gaps may be formed, the outer periphery of the flange 21 may lie inside the outer periphery of the rotational mirror 1 at least two locations (of course, at one location if it is continuous), and the example shown above is merely exemplary. The pawls 61 of an automatic regulating machine 60 (shown by hatching to distinguish it from the rotational mirror 1, etc.) are inserted into such gaps C, and the pawls 61 are urged against the bottom surface of the rotational mirror 1 to thereby slightly raise the rotational mirror 1 against the biasing force of the resilient member 11 and separate it from the mounting surface of the flange 21.

If at this time, the force of the resilient member 11 becomes too strong, the rotational mirror 1 will be distorted and therefore, such structure that the amount of float-up of the rotational mirror 1 is made as small as possible and moreover the regulating force of the resilient member 11 is not much varied by a variation in the amount of float-up is desirable.

According to the experiment, distortion occurred to the reflecting surfaces 1a when a load of 5 kg was applied to the rotational mirror 1 and therefore, it is necessary that the regulating force or the biasing force of the resilient member 11 be less than 5 kg. Accordingly, assuming that the amount by which the rotational mirror 1 is floated up to change the phase of the reflecting surfaces 1a thereof is of the order of 0.1 to 0.2 mm, it is necessary to make the deformation stroke required of the resilient member 11 small so that even when the rotational mirror 1 is floated up, the force applied from the resilient member 11 to the rotational mirror 1 may not exceed 5 kg.

In this manner, there is provided a construction in which the rotational mirror can be separated from the mounting surface against the biasing means and the rotational mirror and the mounting surface of the rotational mirror mounting portion integral with the rotary shaft can rotate relative to each other. The pawls are for rotating the rotational mirror relative to the rotary shaft while separating the rotational mirror from the rotational mirror mounting portion or the flange against the biasing means or the resilient member.

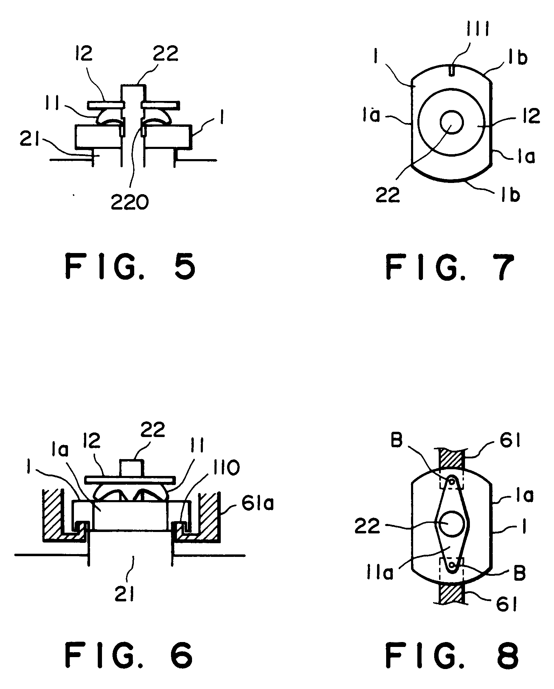

Also, in the present embodiment, that portion 100 of the rotational mirror 1 which contacts with the shaft or the rotary shaft 22 is made small so that the frictional action between the rotational mirror and the shaft 22 may not become great when the rotational mirror 1 is floated up or when the rotational mirror 1 is rotated about the shaft 22 to thereby change the phase thereof. As means for reducing such friction, that portion of the shaft 22 which is fitted to the rotational mirror may be partly worked into a concave portion 220, as shown in Figure 5, whereby the same effect may be obtained.

Figure 5 is a cross-sectional view showing another embodiment of the light deflecting device of the present invention.

In Figure 5, that portion of the rotational mirror which is fitted to the rotary shaft is formed more thinly than the thickness of the rotational mirror. If the thickness of this portion which is fitted to the rotary shaft in a direction parallel to the rotary shaft is small, as in the case of the rotational mirror shown in Figure 1, the frictional action between the rotational mirror and the rotary shaft will not become great when the rotational mirror is floated up or when the rotational mirror is rotated about the rotary shaft to thereby change the phase thereof. Consequently, it is preferable that the thickness of the portion which is fitted to the rotary shaft in the direction parallel to the rotary shaft be 1/2 or less of the thickness of the rotational mirror.

That is, a hole extending through the body of the rotational mirror has a first diameter and a second diameter smaller than the first diameter, and the thickness of the portion having the second diameter in a direction substantially parallel to said hole is 1/2 or less of the thickness of the body of the rotational mirror.

That is, the hole extending through the body of the rotational mirror having reflecting surfaces on the sides thereof has a first diameter and a second diameter smaller than the first diameter, and the thickness of the portion having the second diameter in a direction substantially parallel to said reflecting surfaces is 1/2 or less of the thickness of the body of the rotational mirror.

Simultaneously with the rotational mirror 1 being floated up by the automatic regulating machine 60 as described above, one end portion of the shaft 22 vertically protruding from the case 26 of the motor 2 is fixed by the clamp portion 62 of the automatic regulating machine 60. Thereby the shaft 22 is fixed and the position of the flange 21 is fixed. If in this case, there is a limitation in the shape of the motor 2 and the shaft 22 cannot be protruded downwardly, the side portion of the rotor 20 may be held or the upper portion of the shaft 22 which protrudes upwardly from the fixing member 12 may be held to thereby fix the position of the flange 21.

When the rotational mirror is separated from the mounting surface of the flange and the position of the mounting surface of the flange is fixed, the rotational mirror held by the pawls is rotated relative to the mounting surface by a predetermined amount in the direction of arrow A to thereby change the phase thereof by a predetermined amount. After the phase has been changed by a predetermined amount, the pawls are lowered and the rotational mirror is again mounted on the mounting surface of the flange, whereafter the fixing of the position of the mounting surface is released. Then, the light beam from the light source is deflected and scanned by the rotational mirror being rotated and the amount of unevenness of the pitch is detected.

The above-described operation is repeated and the rotational mirror 1 is rotated in the direction of arrow A to thereby change the phase thereof variously, and the beam is actually deflected and scanned in each phase position to find out a phase position in which the unevenness of the pitch becomes small, whereupon the regulation is completed.

Figure 6 illustrates another method of regulating the phase relation of the rotational mirror, and is a view of the rotational mirror as it is seen from sideways thereof.

Figure 6 shows an embodiment in which a pair of grooves or holes 110 are formed in the bottom surface of the rotational mirror 1, and the pawls 61a of the automatic regulating machine are caught in these holes 110 and thus, it is easy to float up the rotational mirror 1 and change the phase thereof.

Figure 7 is a view of the rotational mirror of the present invention as it is seen from above.

Figure 7 shows an embodiment in which a portion of the upper surface of the rotational mirror 1 is made into a mirror surface 111 formed with a mark. As previously described, there is a relation as shown by the sine curve of Figure 4 between the phase and the amount of unevenness of the pitch and therefore, if the phase relation between the flange 21 and the rotational mirror 1 can be directly detected, it will become unnecessary to see the unevenness of the pitch in each phase position each time and the regulation will be completed by only the detection of that phase and thus, the regulation can be accomplished more quickly. So, if a position detecting sensor, not shown, is installed above the rotational mirror 1 and the reflected light from the mark 111 of the rotational mirror 1 is detected, the phase of the rotational mirror 1 can be detected. In this manner, the regulation can be accomplished efficiently in this embodiment.

The mark 111 shown in Figure 7 is a mark which indicates the position of the reflecting surface of the rotational mirror associated with the position of the reflecting mirror, and it is provided on a portion of the upper surface which is the other portion than the reflecting surfaces 1a of the rotational mirror. Of course, the mark may be provided on the side portion of the rotational mirror which is not provided with the reflecting surfaces.

Also, the mark shown in Figure 7 is an optically detectable mark, but alternatively, it may of course be a mechanically, electrically or magnetically detectable mark.

Figure 8 illustrates another method of regulating the phase relation of the rotational mirror, and is a view of the rotational mirror as it is seen from above.

In the example shown in Figure 8, a position B at which the force of a resilient member 11a regulating the rotational mirror 1 from above acts is on the upper portion of the rotational mirror 1 which corresponds to the portion in which the pawls 61 of the automatic regulating machine are engaged with the rotational mirror 1. Thus, it is difficult for the distortion by a shearing force to occur to the rotational mirror 1. The resilient member 11a in this example, as shown, is of an elongate lozenge shape as viewed from above and of a simple angled shape as viewed from sideways and therefore, the effective stroke of the spring can be made longer than that of the aforedescribed star-shaped spring and the reduction in the function of the spring is small and thus, this resilient member 11a can be said to have a preferable shape. The resilient member 11a causes its force to act on the positions on the rotational mirror which correspond to the gaps between the upper surface of the rotor on which the pawls of the automatic regulating machine lie and the bottom surface of the rotational mirror.

While in the above-described embodiments of the present invention, there has been shown a construction in which the rotary shaft, rotor and flange of the driving motor are integrally formed by discrete members, they may of course be integrally formed by one and the same member.

By the above-described construction, in the present invention, the unevenness of the pitch of the scanning lines can be minimized to that due to the other factors than the tilt of the deflecting-reflecting surface (for example, that due to the vibration of the device), and this can contribute to the high quality of recorded image which has been desired in recent years.

Further, the phase position of the rotational mirror can be regulated after assembly and therefore, in every light deflecting device assembled, the irregularity during assembly is eliminated and the direction of inclination of the surface of the flange and the reflecting surfaces of the rotational mirror can be made parallel to each other, and the unevenness of the pitch of the scanning lines can be minimized.

## Claims

1. A method of regulating a light deflecting apparatus for deflecting a light beam (L), said apparatus comprising: a rotational mirror (1) including a body which has at least one reflecting surface (1a) for reflecting the light beam (L) and a bottom surface;
a rotational mirror mounting portion (21);
biasing means (11, 12) for urging said rotational mirror (1) against said mounting portion (21) with said bottom surface facing said mounting portion (21);
driving means (2, 22, 23, 24, 25, 26) for rotating said mounting portion (21) so that said rotational mirror deflects light impinging on said at least one reflecting surface (1a);
said method comprising the steps of:
urging said rotational mirror (1) against the mounting surface of said rotational mirror mounting portion (21) by said biasing means (11, 12);
separating the rotational mirror (1) from said mounting surface against said biasing means (11, 12);
rotating the rotational mirror (1) relative to said mounting surface;
lowering the rotational mirror (1) to urge the rotational mirror again against said mounting surface;
detecting the actual unevenness of the pitch of the scanning lines of the deflected liqht beam (L) when the rotational mirror (1) is urged against said mounting surface.

2. A method according to claim 1, characterized in that the steps are repeated until a position of the rotational mirror (1) relative to said mounting surface is found in which the unevenness of the pitch of the scanning lines of the deflected light beam (L) is minimized when the rotational mirror (1) is urged against said mounting surface.

3. A method according to claim 1 or 2, characterized in that the step of urging said rotational mirror (1) against said mounting surface by said biasing means (11) is carried out so that a fixed angular relationship between said rotational mirror (1) and said mounting surface is maintained when the rotational mirror (1) is rotated in order to deflect the light.

4. A method according to one of claims 1 to 3, characterized in that said rotational mirror (1) is a deflector (1) including two reflecting surfaces (1a) opposed to each other for deflecting the light beam (L).

5. A light deflecting apparatus for deflecting a light beam, comprising:
a rotational mirror (1) including a body which has at least one reflecting surface (1a) for reflecting the light beam (L) and a bottom surface;
a rotational mirror mounting portion (21);
biasing means (11, 12) for urging said rotational mirror (1) against said mounting portion (21) with said bottom surface facing said mounting portion (21);
driving means (2, 22, 23, 24, 25, 26) for rotating said mounting portion (21) so that said rotational mirror deflects light impinging on said at least one reflecting surface (1a);
a gap (C) provided between the bottom surface of said rotational mirror (1) and said mounting portion (21);
the apparatus being characterized by
engagement portions (110) provided on said rotational mirror (1) for separating the rotational mirror (1) from said mounting portion (21) against said biasing means (11, 12), wherein said engagement portions are constituted by a pair of grooves or holes (110) formed in the bottom surface of the rotational mirror (1).

6. A light deflecting apparatus according to claim 5, furthermore comprising means (61; 61a) for separating said rotational mirror (1) from said mounting portion (21) against said biasing means (11) and for effecting rotation (A) of said rotational mirror (1) relative to said mounting portion (21).

7. A light deflecting apparatus according to claim 6, characterized in that said separating means (61a) for separating said deflector (1) from said mounting portion (21) against said biasing means (11, 11a) are adapted so as to engage with said engagement portions (110).

8. A light deflecting apparatus according to claim 5, characterized in that said biasing means (11, 11a) are adapted so as to urge said rotational mirror (1) in a fixed angular relation against said mounting portion (21).

9. A light deflecting apparatus according to one of claims 5 to 8, characterized in that the body of said rotational mirror (1) includes two reflecting surfaces (1a) opposed to each other for deflecting the light beam (L).

10. A light deflecting apparatus according to claim 9, characterized in that the body of said rotational mirror (1) includes two non-reflecting portions (1b) interposed between the reflecting surfaces (1a).

11. A light deflecting apparatus according to claim 10, characterized in that said rotational mirror mounting portion (21) has a raised mounting surface which extension is smaller than the bottom surface of the non reflecting portions (1b) of said rotational mirror (1).

12. A light deflecting apparatus according to one of claims 5 to 11, characterized in that said body of the rotational mirror (1) is formed with a hole extending along the axis of rotation, said hole having a hole portion with a first diameter and a hole portion with a second diameter (100), wherein the thickness of the hole portion with said second diameter (100) is 1/2 or less than the thickness of said body in the direction of said rotational axis.

13. A light deflecting apparatus according to one of claims 5 to 12, characterized in that a mark is provided on a portion of said body which is not the reflecting surface (1a) of said body and which indicates the position of said reflecting surface (1a).

14. A light deflecting apparatus according to claim 13, characterized in that said mark is optically detectable.

15. A laser beam printing apparatus comprising the light deflecting apparatus according to one of claims 5 to 14 and a photosensitive member (5) for receiving the laser light (L) deflected by said light deflecting apparatus.

16. A regulating apparatus for applying the method according to claim 1 to a light deflecting apparatus as defined in Claim 1, characterized in that the regulating apparatus comprises:
separating means (61; 61a) for separating said rotational mirror (1) from said mounting surface against said biasing means (11, 12),
rotating means (A) for rotating the rotational mirror (1) relative to said mounting surface, and
clamping means (62) for holding said mounting surface during operation of said rotating means.

17. A regulating apparatus according to claim 16, characterized in that said separating means are constituted by pawls (61; 61a).

18. A regulating apparatus according to claim 17, characterized in that said pawls (61; 61a) are formed so that they can be engaged with grooves or holes (110) formed in the bottom surface of said rotational mirror (1).

19. A regulating apparatus according to one of claims 16 to 18, characterized in that said clamping means are constituted by a clamp portion (62) for fixing one end portion of a rotary shaft (22) constructed integrally with said mounting portion (21) when said rotational mirror (1) is separated from said mounting portion (21).

## Patentansprüche

1. Verfahren zur Einstellung einer Lichtablenkvorrichtung zur Ablenkung eines Lichtstrahls (L), wobei die Vorrichtung aufweist,
einen drehbaren Spiegel (1), der einen Körper aufweist, der mindestens eine reflektierende Fläche (1a) zur Reflexion des Lichtstrahls (L) und eine untere Fläche hat,
einen Befestigungsabschnitt (21) für den drehbaren Spiegel,
eine Vorspanneinrichtung (11, 12), um den drehbaren Spiegel (1) gegen den Befestigungsabschnitt (21) zu drücken, wobei die untere Fläche dem Befestigungsabschnitt (21) zugewandt ist,
eine Antriebseinrichtung (2, 22, 23, 24, 25, 26) zur Drehung des Befestigungsabschnitts (21), so daß der drehbare Spiegel Licht ablenkt, welches auf der mindestens einen reflektierenden Fläche (1a) auftrifft,
wobei das Verfahren die Schritte aufweist,
Drücken des drehbaren Spiegels (1) gegen die Befestigungsfläche des Befestigungsabschnitts (21) für den drehbaren Spiegel mittels der Vorspanneinrichtung (11, 12), Trennen des drehbaren Spiegels (1) von der Befestigungsfläche entgegen der Vorspanneinrichtung (11, 12),
Drehen des drehbaren Spiegels (1) relativ zur Befestigungsfläche,
Absenken des drehbaren Spiegels (1), um den drehbaren Spiegel wieder gegen die Befestigungsfläche zu drücken, Erfassung der tatsächlichen Ungleichmäßigkeit des Abstands der Abtastzeilen des abgelenkten Lichtstrahls (L), wenn der drehbare Spiegel (1) gegen die Befestigungsfläche gedrückt ist.

2. Verfahren gemäß Anspruch 1, dadurch gekennzeichnet, daß die Schritte wiederholt werden, bis eine Position des drehbaren Spiegels (1) relativ zu der Befestigungsfläche gefunden ist, in welcher die Ungleichmäßigkeit des Abstands der Abtastzeilen des abgelenkten Lichtstrahls (L) minimiert ist, wenn der drehbare Spiegel (1) gegen die Befestigungsfläche gedrückt ist.

3. Verfahren gemäß Anspruch 1 oder 2, dadurch gekennzeichnet, daß der Schritt des Andrückens des drehbaren Spiegels (1) gegen die Befestigungsfläche mittels der Vorspanneinrichtung (11) derart ausgeführt wird, daß eine feststehende Winkelbeziehung zwischen dem drehbaren Spiegel (1) und der Befestigungsfläche aufrechterhalten wird, wenn der drehbare Spiegel (1) gedreht wird, um das Licht abzulenken.

4. Verfahren gemäß einem der Ansprüche 1 bis 3, dadurch gekennzeichnet, daß der drehbare Spiegel (1) ein Deflektor (1) ist, der zur Ablenkung des Lichtstrahls (L) zwei reflektierende Flächen (1a) aufweist, die einander entgegengesetzt sind.

5. Lichtablenkvorrichtung zur Ablenkung eines Lichtstrahls, die aufweist,
einen drehbaren Spiegel (1), der einen Körper aufweist, der mindestens eine reflektierende Fläche (1a) zur Reflexion des Lichtstrahls (L) und eine untere Fläche hat,
einen Befestigungsabschnitt (21) für den drehbaren Spiegel,
eine Vorspanneinrichtung (11, 12), um den drehbaren Spiegel (1) gegen den Befestigungsabschnitt (21) zu drücken,
wobei die untere Fläche dem Befestigungsabschnitt (21) zugewandt ist,
eine Antriebseinrichtung (2, 22, 23, 24, 25, 26) zur Drehung des Befestigungsabschnitts (21), so daß der drehbare Spiegel Licht ablenkt, welches auf der mindestens einen reflektierenden Fläche (1a) auftrifft,
einen Zwischenraum (C), der zwischen der unteren Fläche des drehbaren Spiegels (1) und dem Befestigungsabschnitt (21) geschaffen ist,
wobei die Vorrichtung gekennzeichnet ist durch Eingriffsabschnitte (110), die an dem drehbaren Spiegel (1) vorgesehen sind, um den drehbaren Spiegel (1) entgegen den Vorspanneinrichtung (11, 12) von dem Befestigungsabschnitt (21) zu trennen, wobei die Eingriffsabschnitte durch ein Paar Nuten oder Löcher (110) gebildet sind, die in der unteren Fläche des drehbaren Spiegels (1) ausgebildet sind.

6. Lichtablenkvorrichtung gemäß Anspruch 5, die außerdem eine Einrichtung (61, 61a) zum Trennen des drehbaren Spiegels (1) von dem Befestigungsabschnitt (21) entgegen der Vorspanneinrichtung (11) und zum Bewirken der Drehung (A) des drehbaren Spiegels (1) relativ zu dem Befestigungsabschnitt (21) aufweist.

7. Lichtablenkvorrichtung gemäß Anspruch 6, dadurch gekennzeichnet, daß die Trenneinrichtung (61a) zur Trennung des Deflektors (1) von dem Befestigungsabschnitt (21) entgegen der Vorspanneinrichtung (11, 11a) dazu angepaßt ist, mit den Eingriffsabschnitten (110) in Eingriff zu gelangen.

8. Lichtablenkvorrichtung gemäß Anspruch 5, dadurch gekennzeichnet, daß die Vorspanneinrichtungen (11, 11a) dazu angepaßt sind, den drehbaren Spiegel (1) in eine feststehende Winkelbeziehung gegen den Befestigungsabschnitt (21) zu drücken.

9. Lichtablenkvorrichtung gemäß einem der Ansprüche 5 bis 8 dadurch gekennzeichnet, daß der Körper des drehbaren Spiegels (1) zur Ablenkung des Lichtstrahls (L) zwei reflektierende Flächen (1a) aufweist, die einander entgegengesetzt sind.

10. Lichtablenkvorrichtung gemäß Anspruch 9, dadurch gekennzeichnet, daß der Körper des drehbaren Spiegels (1) zwei nicht-reflektierende Abschnitte (1b) aufweist, die zwischen den reflektierenden Flächen (1a) eingesetzt sind.

11. Lichtablenkvorrichtung gemäß Anspruch 10, dadurch gekennzeichnet, daß der Befestigungsabschnitt (21) für den drehbaren Spiegel eine erhöhte Befestigungsfläche hat, deren Ausdehnung kleiner als die untere Fläche der nichtreflektierenden Abschnitte (1b) des drehbaren Spiegels (1) ist.

12. Lichtablenkvorrichtung gemäß einem der Ansprüche 5 bis 11, dadurch gekennzeichnet, daß der Körper des drehbaren Spiegels (1) mit einem Loch ausgebildet ist, das sich längs der Drehachse erstreckt, wobei das Loch einen Lochabschnitt mit einem ersten Durchmesser und einen Lochabschnitt mit einem zweiten Durchmesser (100) hat, wobei die Dicke des Lochabschnitts mit dem zweiten Durchmesser (100) 1/2mal oder weniger als die Dicke des Körpers in die Richtung der Drehachse ist.

13. Lichtablenkvorrichtung gemäß einem der Ansprüche 5 bis 12, dadurch gekennzeichnet, daß eine Markierung an einem Abschnitt des Körpers, welcher nicht die reflektierende Fläche (1a) des Körpers ist, geschaffen ist, und welche die Position der reflektierenden Fläche (1a) bezeichnet.

14. Lichtablenkvorrichtung gemäß Anspruch 13, dadurch gekennzeichnet, daß die Markierung optisch erfaßbar ist.

15. Laserstrahldruckvorrichtung, welche die Lichtablenkvorrichtung gemäß einem der Ansprüche 5 bis 14 und ein lichtempfindliches Element (5) zum Empfang des mittels der Lichtablenkvorrichtung abgelenkten Laserlichts (L) aufweist.

16. Einstellvorrichtung zur Anwendung des Verfahrens gemäß Anspruch 1 bei einer Lichtablenkvorrichtung, wie sie in Anspruch 1 definiert ist, dadurch gekennzeichnet, daß die Einstellvorrichtung aufweist,
eine Trenneinrichtung (61, 61a) zur Trennung des drehbaren Spiegels (1) von der Befestigungsfläche entgegen der Vorspanneinrichtung (11, 12),
eine Dreheinrichtung (A) zur Drehung des drehbaren Spiegels (1) relativ zu der Befestigungsfläche, und
eine Klemmeinrichtung (62) zum Halten der Befestigungsfläche während der Betätigung der Dreheinrichtung.

17. Einstelleinrichtung gemäß Anspruch 16, dadurch gekennzeichnet, daß die Trenneinrichtungen durch Klinken (61, 61a) gebildet sind.

18. Einstelleinrichtung gemäß Anspruch 17, dadurch gekennzeichnet, daß die Klinken (61, 61a) derart ausgebildet sind, daß sie mit Nuten oder Löchern (110) in Eingriff gelangen können, die in der unteren Fläche des drehbaren Spiegels (1) ausgebildet sind.

19. Einstelleinrichtung gemäß einem der Ansprüche 16 bis 18, dadurch gekennzeichnet, daß die Klemmeinrichtung durch einen Klemmabschnitt (62) zur Fixierung eines Endabschnitts einer einstückig mit dem Befestigungsabschnitt (21) konstruierten Drehwelle (22), wenn der drehbare Spiegel (1) von dem Befestigungsabschnitt (21) getrennt wird, gebildet ist.

## Revendications

1. Procédé de régulation d'un appareil de déviation de la lumière destiné à dévier un faisceau lumineux (L), ledit appareil comportant :
un miroir tournant (1) comprenant un corps qui présente au moins une surface réfléchissante (1a) destinée à réfléchir le faisceau lumineux (L), et une surface inférieure ;
une partie (21) de montage du miroir tournant ;
un moyen (11, 12) de rappel destiné à solliciter ledit miroir tournant (1) contre ladite partie de montage (21), ladite surface inférieure faisant face à ladite partie de montage (21) ;
des moyens d'entraînement (2, 22, 23, 24, 25, 26) destinés à faire tourner ladite partie de montage (21) de façon que ledit miroir tournant dévie la lumière tournant sur la ou chaque surface réfléchissante (1a) ;
ledit procédé comprenant les étapes qui consistent :
à solliciter ledit miroir tournant (1) contre la surface de montage de ladite partie (21) de montage du miroir tournant à l'aide dudit moyen de rappel (11, 12) ;
à écarter le miroir tournant (1) de ladite surface de montage contre ledit moyen de rappel (11, 12) ;
à faire tourner le miroir tournant (1) par rapport à ladite surface de montage ;
à faire descendre le miroir tournant (1) pour le solliciter de nouveau contre ladite surface de montage ;
à détecter l'inégalité réelle du pas des lignes de balayage du faisceau lumineux dévié (L) lorsque le miroir tournant (1) est sollicité contre ladite surface de montage.

2. Procédé selon la revendication 1, caractérisé en ce que les étapes sont répétées jusqu'à ce que l'on trouve une position du miroir tournant (1) par rapport à ladite surface de montage dans laquelle l'inégalité du pas des lignes de balayage du faisceau lumineux dévié (L) est minimisée lorsque le miroir tournant (1) est sollicité contre ladite surface de montage.

3. Procédé selon la revendication 1 ou 2, caractérisé en ce que l'étape de sollicitation dudit miroir tournant (1) contre ladite surface de montage par ledit moyen de rappel (11) est effectuée de façon qu'une relation angulaire fixe entre ledit miroir tournant (1) et ladite surface de montage soit maintenue lorsque le miroir tournant (1) est tourné pour dévier la lumière.

4. Procédé selon l'une des revendications 1 à 3, caractérisé en ce que ledit miroir tournant (1) est un déflecteur (1) comprenant deux surfaces réfléchissantes (1a) opposées l'une à l'autre pour dévier le faisceau lumineux (L).

5. Appareil de déviation de lumière pour dévier un faisceau lumineux, comportant :
un miroir tournant (1) comprenant un corps qui présente au moins une surface réfléchissante (1a) destinée à réfléchir le faisceau lumineux (L), et une surface inférieure ;
une partie (21) de montage du miroir tournant ;
un moyen (11, 12) de rappel destiné à solliciter ledit miroir tournant (1) contre ladite surface de montage (21) de façon que ladite surface inférieure soit face à ladite partie (21) de montage ;
des moyens d'entraînement (2, 22, 23 ,24, 25, 26) destinés à faire tourner la partie (21) de montage afin que ledit miroir tournant dévie la lumière tombant sur ladite ou chaque surface réfléchissante (1a) ;
un intervalle (C) prévu entre la surface inférieure dudit miroir tournant (1) et ladite partie de montage (21) ;
l'appareil étant caractérisé par
des parties d'engagement (110) prévues sur ledit miroir tournant (1) pour écarter le miroir tournant (1) de ladite partie (21) de montage contre ledit moyen (11, 12) de rappel, les parties d'engagement étant constituées par deux gorges ou trous (110) formés dans la surface inférieure du miroir tournant (1).

6. Appareil de déviation de lumière selon la revendication 5, comportant en outre des moyens (61 ; 61a) destinés à écarter ledit miroir tournant (1) de ladite partie de montage (21) contre ledit moyen de rappel (11) et à effectuer une rotation (A) dudit miroir tournant (1) par rapport à ladite partie de montage (21).

7. Appareil de déviation de lumière selon la revendication 6, caractérisé en ce que ledit moyen d'écartement (61a) destiné à écarter ledit déflecteur (1) de ladite partie de montage (21) contre ledit moyen de rappel (11, 11a) est conçu pour être engagé avec lesdites parties d'engagement (110).

8. Appareil de déviation de lumière selon la revendication 5, caractérisé en ce que ledit moyen de rappel (11, 11a) est conçu pour solliciter ledit miroir tournant (1) dans une relation angulaire fixe contre ladite partie de montage (21).

9. Appareil de déviation de lumière selon l'une des revendications 5 à 8, caractérisé en ce que le corps dudit miroir tournant (1) présente deux surfaces réfléchissantes (1a) opposées l'une à l'autre pour dévier le faisceau lumineux (L).

10. Appareil de déviation de lumière selon la revendication 9, caractérisé en ce que le corps dudit miroir tournant (1) comprend deux parties non réfléchissantes (1b) interposées entre les surfaces réfléchissantes (1a).

11. Appareil de déviation de lumière selon la revendication 10, caractérisé en ce que ladite partie (21) de montage du miroir tournant présente une surface de montage surélevée dont l'étendue est inférieure à celle de la surface inférieure des parties non réfléchissantes (1b) dudit miroir tournant (1).

12. Appareil de déviation de lumière selon l'une des revendications 5 à 11, caractérisé en ce que ledit corps du miroir tournant (1) est formé de façon à présenter un trou s'étendant le long de l'axe de rotation, ledit trou ayant une partie d'un premier diamètre et une partie d'un second diamètre (100), l'épaisseur de la partie du trou ayant ledit second diamètre (100) étant égale à la moitié ou moins de l'épaisseur dudit corps dans la direction dudit axe de rotation.

13. Appareil de déviation de lumière selon l'une des revendications 5 à 12, caractérisé en ce qu'un repère est prévu sur une partie dudit corps qui n'est pas la surface réfléchissante (1a) dudit corps, lequel repère indique la position de ladite surface réfléchissante (1a).

14. Appareil de déviation de lumière selon la revendication 13, caractérisé en ce que ledit repère peut être détecté optiquement.

15. Appareil d'impression à faisceau laser comportant l'appareil de déviation de lumière selon l'une des revendications 5 à 14 et un élément photosensible (5) destiné à recevoir la lumière laser (L) déviée par ledit appareil de déviation de lumière.

16. Appareil de régulation pour appliquer le procédé selon la revendication 1 à un appareil de déviation de lumière selon la revendication 1, caractérisé en ce que l'appareil de régulation comporte :
des moyens d'écartement (61 ; 61a) destinés à écarter ledit miroir tournant (1) de ladite surface de montage contre ledit moyen de rappel (11, 12),
des moyens de rotation (A) destinés à faire tourner le miroir tournant (1) par rapport à ladite surface de montage, et
des moyens de bridage (62) destinés à maintenir ladite surface de montage pendant le fonctionnement dudit moyen de rotation.

17. Appareil de régulation selon la revendication 16, caractérisé en ce que lesdits moyens d'écartement sont constitués par des griffes (61, 61a).

18. Appareil de régulation selon la revendication 17, caractérisé en ce que lesdites griffes (61, 61a) sont formées de manière à pouvoir être engagées avec des gorges ou des trous (110) formés dans la surface inférieure dudit miroir tournant (1).

19. Appareil de régulation selon l'une des revendications 16 à 18, caractérisé en ce que lesdits moyens de bridage sont constitués par une partie à bride (62) destinée à fixer une partie extrême d'un arbre tournant (22) réalisé d'une seule pièce avec ladite partie de montage (21) lorsque ledit miroir tournant (1) est écarté de ladite partie de montage (21).
